# EUROPEAN PATENT SPECIFICATION

(11) **EP 2 611 048 B1**
(45) Date of publication and mention of the grant of the patent: **11.02.2015**
(21) Application number: 12197900.9
(22) Date of filing: 18.12.2012
(51) Int. Cl.: H04B 10/50, H04J 14/02, H04L 27/26

(54) **Multi-channel transmitter for coherent udwdm networks and method for generating a multi-channel signal**
Mehrkanalsender für kohärente UDWDM-Netzwerke und Verfahren zur Erzeugung eines Mehrkanalsignals
Émetteur multicanal pour réseaux udwdm cohérents et procédé permettant de générer un signal multicanal

(30) Priority: 30.12.2011 EP 11196223
(43) Date of publication of application: 03.07.2013
(73) Proprietor: Xieon Networks S.à.r.l., 1748 Luxemburg (LU)
(72) Inventor: Gottwald, Erich, 83607 Holzkirchen (DE); Rohde, Harald, 81673 Munich (DE)
(74) Representative: Lucke, Andreas

(56) References cited:
- EP-A1- 1 501 206
- WO-A1-02/17534
- US-B1- 6 504 636

## Description

### FIELD OF THE INVENTION

The invention relates to an optical communication system and to a method of generating a multi-channel signal in an optical network. In particular, the invention relates to a coherent (OLT) transmitter for an Ultra-Dense Wavelength Division Multiplex (UDWDM) network especially for the NSN NGOA (Next Generation Optical Access) system in which a set of densely spaced optical channels is generated from one single laser source.

### BACKGROUND OF THE INVENTION

Digital signal processing and signal generation allows flexible access networks with variable data rate, modulation format and channel spacing. But a digital signal processing and signal generation based transmitter for optical multi carrier/channel generation needs very fast digital to analog converters for generating the analog signals which are driving the electro optic modulator.

The first version of our NGOA systems must handle carrier frequencies up to 14 GHz requiring sampling rates of clearly more than 28 Gigasamples per second.

WO0217534A1 describes a fiber optic terminal system employing subcarrier multiplexing. Here, the aggregate of modulated carriers is modulated onto an optical carrier before transmitting the channels together through a fiber optic cable. Modems provide data inputs to upconverters and the outputs of the upconverters are coupled to inputs of a multiplexer, which combines the outputs to a single output. A downconverter receives the output of the multiplexer to downconvert the output in the frequency domain. A power converter adds the outputs of such multiplexers (and downconverters) to provide an optical transmitter with an input signal. By having the downconversion occur after a spectrum of carriers has been generated, the number of upconverters is reduced.

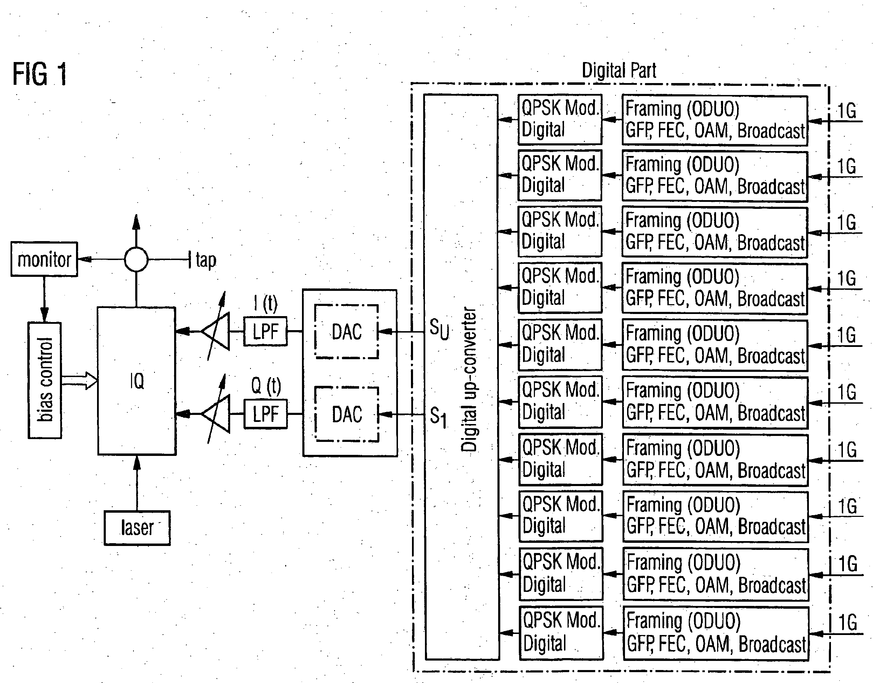

FIG. 1 shows a conventional design of OLT TX for coherent UDWDM network (NSN NGOA) based on digital signal processing and ultra fast DACs as interface to analog technology which delivers the analog driving signals.

Analog carrier generation and modulation known in the art as well, but inflexible in terms of data rate, modulation format and channel spacing. Besides that, the development costs of such conventional systems would be extremely high.

### BRIEF DESCRIPTION OF THE DRAWINGS

The invention is explained by way of example in more detail below with the aid of the attached drawings.
FIG. 1 is a schematic representation a conventional design of OLT TX for coherent UDWDM network (NSN NGOA).
FIG. 2a shows simulation results, "pseudo-eye" diagrams for the detected signals for a 8 channel OOK system according to an embodiment of the invention.
FIG, 2b shows simulation results, "pseudo-eye" diagrams for the detected signals for a 8 channel DQPSK system according to an embodiment of the invention.
FIG. 3 shows a TX concept delivering 8 x 1 Gbit/s channels in which ultra high speed DACs are replaced by ultra high speed digital circuitry according to an embodiment of the invention.
FIG. 4 shows an improved realization of OLT TX with analog summing unit instead of DACs according to an embodiment of the invention.
FIG.5 shows a realization of OLT TX in which the baseband low-pass filters are employed for pulse shaping according to an embodiment of the invention.
FIG. 6 shows a possible realization of the analog summing unit according to an embodiment of the invention.
FIG. 7 shows a possible realization of the analog summing unit according to an embodiment of the invention.

### DESCRIPTION OF THE INVENTION

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

The solution provided by an embodiment of the invention suggests a transmitter which utilizes the special spectral properties of digital pulses together with a restriction of the covered frequency range of two succeeding octave bands, e. g. 5 to <15 GHz and low pass filtering in the electrical domain (driving signal) or optical domain (opticl bandpass, WDM filter). Instead of an ultra fast DAC as interface between digital and analog "world" a simple "unweighted" summation of pure digital signals is used. In contrast to that, a DAC uses "weigthed" summation of the respective term, which requires stringent adjustment and timing

In case of ON-OFF keying the carriers are generated by pure digital 0-1 sequences and with help of an AND gate or much better a fast analog multiplier the modulation via low pass filtered pure digital signal is done.

In case of an ideal AND gate as modulator we have overlapping spectra and high channel crosstalk without additional analog filtering.

The reason that this works is that the spectra are a linear functions and that the Fourier coefficients for a 0-1 sequence contains only the odd terms, see e. g. Bronstein, Taschenbuch der Mathematik, 19. Auflage, 1979, chapter 4.4.1.2 "Tabelle einiger Fourierentwicklungen" A sequence of 0-1 is discribed by:
~(sin(x)+sin(3x)/3+sin(5x)/5+...)

This means, that a 0-1 sequence according to 5 GHz has decreasing Fourier coefficients for 15, 25 ... GHz,
the 0-1 sequence according to 8 GHz has decreasing Fourier coefficients for 24, 40 ... GHz,
the 0-1 sequence according to 11 GHz has decreasing Fourier coefficients for 33, 55 ... GHz,
and the 0-1 sequence according to 14 GHz has decreasing fourier coefficients for 42, 70 ... GHz,

Therefore a frequency plan according to NGOA with e.g. 2 times 4 channels can be realized by pure digital carrier generation.

If the digital carriers are low pass filtered with fg< 3* f_{carrier} the "two succeeding octave-band limitation" no longer limits the frequency plan - meaning that the 3^{rd} order harmonic has a higher frequency than the carrier with the highest frequency. Only low pass filters are necessary in this case.

Of course, other carrier frequencies e.g. 2, 5, 8, 11 GHz or 8, 11, 14, 17 GHz or more carrier frequencies / channels are possible according to technical requirements (1GHz is here the channel distance between adjacent channels, if all channels are used).

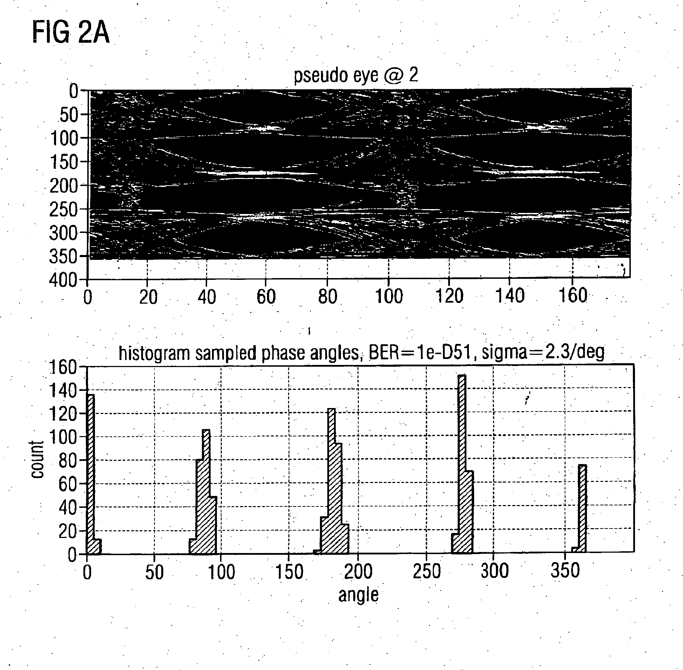

FIG. 2a shows simulation results, "pseudo-eye" diagrams for the detected signals for a 8 channel OOK system according to an embodiment of the invention.

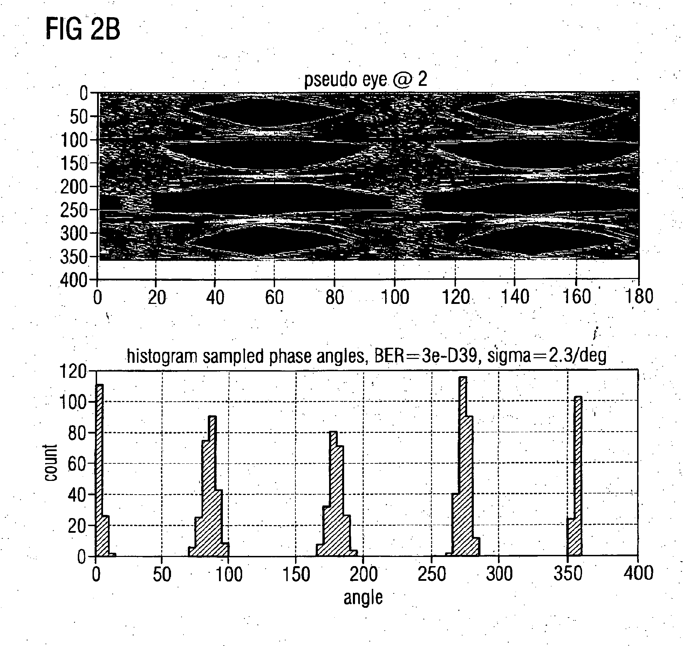

FIG. 2b shows simulation results, "pseudo-eye" diagrams for the detected signals for a 8 channel DQPSK system according to an embodiment of the invention.

The 90° phase shift between the 2 orthogonal carriers for the DQPSK signal is realized by a time delay between the 0-1 sequences of ½ of the duration of a '1' (or '0')

The speed of the digital electronics must therefore be able to handle 56 Gb/s (equivalent to 28 GHz) for signals on 14 GHz carriers.

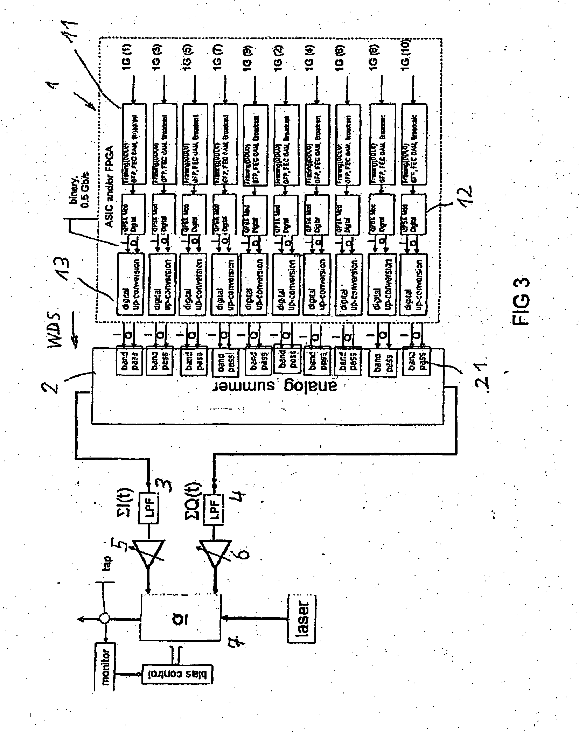

FIG. **3** shows a TX concept delivering 10 x 1 Gbit/s channels in which ultra high speed DACs are replaced by ultra high speed digital circuitry and an analog summarizer 2 or "summing unit" (hereafter referred to as analog summer) according to an embodiment of the invention. Ten received 1 Gb/s data signals 1G(1) - 1G(10) are fed to a conversion unit 1 and converted into multi-channel signals with different electrical carrier frequencies. First, the received data signals are processed in signal processing units 11 (only one unit is denoted), e.g. framing information and forward error correction parity bits may be added. The completed 'data signals' are then modulated, in the shown embodiment QPSK (quadrature phase shift keying) is used. The modulated base-band signals are then converted in modulated "wavelength division signals" with higher and different carriers corresponding to the channels/signals of a WDM (wavelength division multiplexed) signal. All known conversion methods may be used like using stored conversion tables, technical or mathematical processing. If an above mentioned AND-gate is used as up-conversion unit, the logical 1 of the data signal is combined with the 1, 0-sequence of a carrier with much higher frequency, and the logical data "1" is output as carrier 1, 0-sequence.

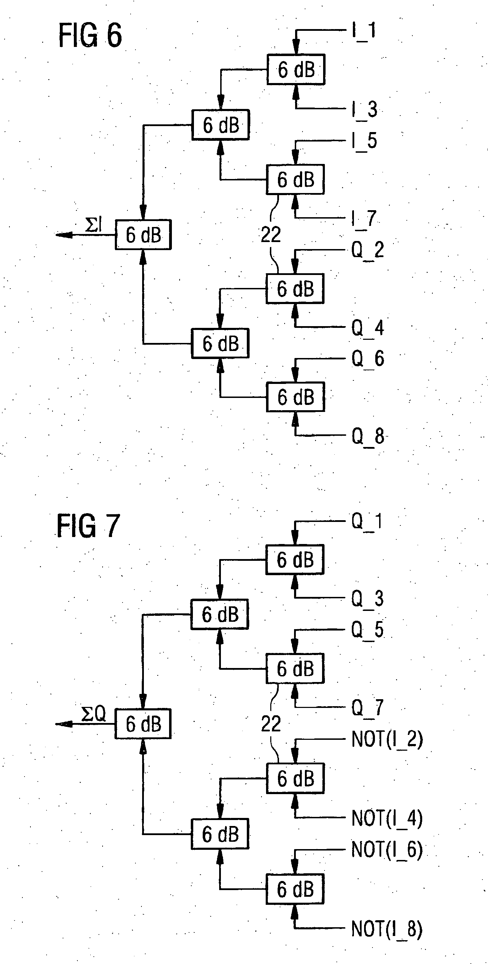

The outputs of all up-conversion units 21 (only one is denoted) are fed to an analog summer 2, band-pass filtered and added. Today, the summer comprises passive summing units 22 which are depicted in FIG. 6 and FIG. 7. Because QPSK is used, two summing units are necessary for the real components "I" and the imaginary components "Q". The signals corresponding to sums ΣI(t), ΣQ(t) are fed via additional low pass filters 3 and 4 respectively and adjustable amplifiers 5 and 6 respectively to modulation inputs of an optical IQ modulator 7 outputting an optical WDM signal comprising QPSK signals.

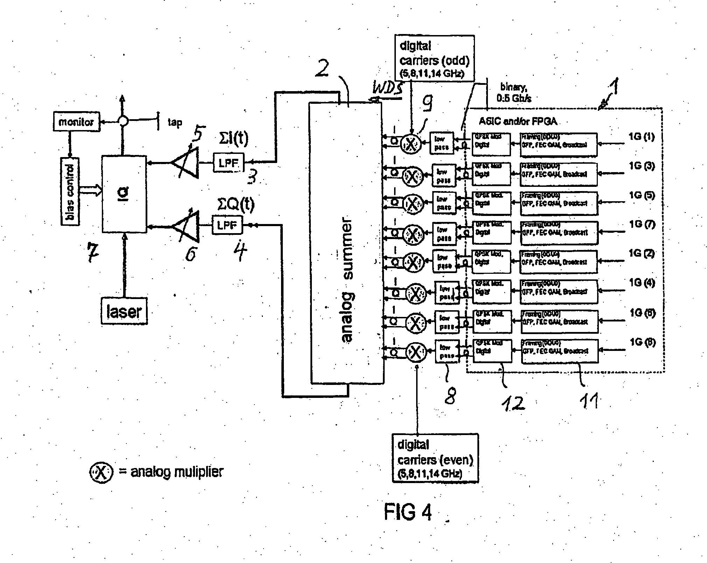

FIG. 4 shows an improved realization of OLT TX for 8 channels with analog summing unit instead of DACs and analog modulators 9 according to a further improved embodiment of the invention. The complicated or insufficient functioning up-conversion units are substituted by (preferable) analog multipliers 9 (only one multiplier is denoted). Different carriers, here with frequencies of 5, 8, 11 and 14 GHz and with 90° different phases are fed as modulation signals to the multipliers 9. The band-passes shown in FIG. 3 are substituted by cheaper low pass filters 8 which are arranged upstream in series with the multipliers. Of course, both signal components I and Q are individually low pass filtered and fed to an multiplier, parallel or serial.

Again, the driving signal for the IQ modulator is an analog sum of filtered up-converted "wavelength diversity signals" all having the about the same weight. The low pass filters 3 and 4 again delimit the frequency bands of the modulation signals.

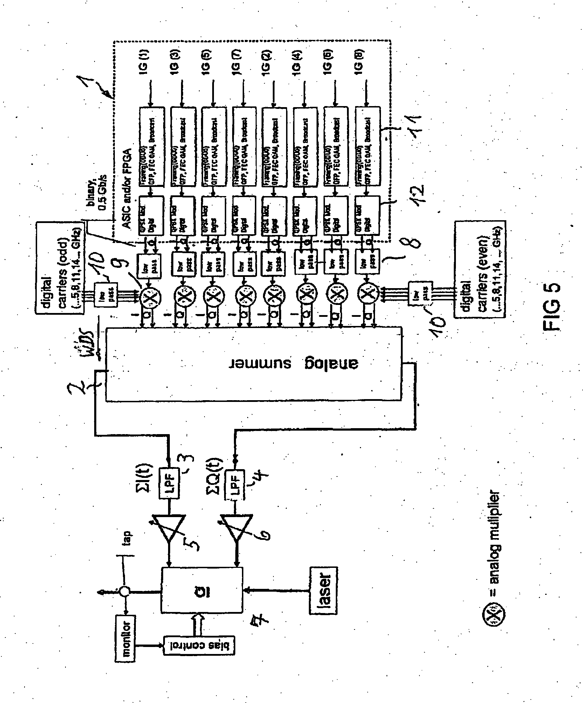

**FIG. 5** shows a preferred realization of OLT TX shown in FIG. 4, wherein additional low-pass filters 10 are employed for pulse shaping of the carrier signals, e.g. converting into sinus signals. This embodiment avoids unwanted modulation products.

**FIG. 6** shows a possible realization of an I-part of the analog summer 2 according to an embodiment of the invention. The analog summing unit shown includes a version with pure resistive add-units (I-part) with an insertion loss for 8 channels of 18 dB.

**FIG. 7** shows a possible realization of a Q-part of the analog summer 2 according to an embodiment of the invention. The analog summing unit shown includes a version with pure resistive couplers with an insertion loss for 8 channels of 18 dB. Important is the 180° phase shift/inversion (NOT) for the even (or odd) channel numbers as we need an upper and a lower side band.

The invention bears the following advantages:
- no ultra fast DACs as interface between digital and analog "world".
- ultra high speed DACs are replaced by ultra high speed digital circuitry.

The present invention is not limited to the details of the above described principles. The invention is defined by the appended claims. Mathematical conversions or equivalent calculations of the signal values based on the inventive method or the use of analogue signals instead of digital values are also incorporated.

## Claims

1. Multi-channel transmitter for optical networks, comprising
- a plurality of parallel modulators (QPSK Mod), each modulating a data signal and outputting a digital modulated signal (I, Q);
- frequency conversion units receiving the digital modulated signals (I, Q) and converting the digital modulated signals (I, Q) into converted signals (WDS) with higher and different carrier frequencies; **characterized by**
- an analog summer (2) receiving the converted signals (WDS) and outputting a modulation signal (ΣI(t), ΣQ(t)); and
- an optical modulator (7) for modulating an optical carrier receiving said modulation signal outputted by the analog summer (ΣI(t), ΣQ(t)).

2. The multi-channel transmitter according to claim 1, wherein each of the frequency conversion units comprises
a logical binary gate and a band-pass filter (21) connected downstream in series.

3. The multi-channel transmitter according to claim 1, wherein each of the frequency conversion units comprises
an analog multiplier (9) and a low-pass filter (8).

4. The multi-channel transmitter according to one of the preceding claims, wherein
a 0-1 sequence signal is used as carrier for signal conversion.

5. The multi-channel transmitter according to one of the preceding claims, wherein
the electrical modulators (12) are QPSK modulators and the optical modulator (7) is an optical IQ modulator.

6. The multi-channel transmitter according to one of the preceding claims, wherein
the carriers have a frequency distance of 3 times a channel distance.

7. The multi-channel transmitter according claim 6, wherein
the highest carrier frequency is less than 3 times the frequency of the lowest carrier frequency.

8. A method for generating a multi channel frequency multiplex division signal, comprising the steps of
- modulating data signals generating digital modulated signals (I, Q);
- frequency converting the digital modulated signals (I, Q) into converted signals (WDS) with higher and different carrier frequencies (5, 8, 11, 14 GHz); **characterized by**
- analog adding the converted signals (WDS) gaining a modulation signal (ΣI(t), ΣQ(t)); and
- modulating an optical carrier by the modulation signal.

9. The method according to claim 8, wherein
the digital modulated signals (I, Q) are frequency converted by multiplying with a 0-1 sequence signal.

10. The method according to claim 9, wherein
the converted signals have a carrier frequency distance of 3 times a channel distance.

11. The method according to claim 10, wherein
the highest carrier frequency is less than 3 times the frequency of the lowest carrier frequency.

12. The method according to claim 8, wherein
the digital modulated signals (I, Q) are frequency converted by multiplying with a low pass filtered 0-1- sequence carrier signal.

13. The method according to one of the claim 8 - 12, wherein
the carrier signals and/or digital modulated signals (I, Q) and/or the modulation signal (ΣI(t), ΣQ(t)) are low pass filtered.

## Patentansprüche

1. Multikanal-Sender für optische Netzwerke, der Folgendes umfasst:
- eine Mehrzahl von parallelen Modulatoren (QPSK Mod), die jeweils ein Datensignal modulieren und ein digitales moduliertes Signal (I, Q) ausgeben;
- Frequenzumwandlungseinheiten, die das digitale modulierte Signal (I,Q) empfangen und die digitalen modulierten Signale (I,Q) in konvertierte Signale (WDS) umwandeln, die eine höhere und unterschiedliche Trägerfrequenzen aufweisen; **gekennzeichnet durch**
- einen analogen Addierer (2), der die umgewandelten Signale (WDS) empfängt und ein Modulationssignal (ΣI(t),ΣQ(t)) ausgibt; und
- einen optischen Modulator (7) zum Modulieren eines optischen Trägersignals, der das von dem analogen Addierer (ΣI(t),ΣQ(t)) ausgegebene Modulationssignal empfängt.

2. Multikanal-Sender nach Anspruch 1, wobei eine jede der Frequenzumwandlungseinheiten ein logisches binäres Gate und einen Bandpassfilter (21) umfasst, der stromabwärts in Reihe geschaltet ist.

3. Multikanal-Sender nach Anspruch 1, bei dem eine jede der Frequenzumwandlungseinheiten einen analogen Multiplizierer (9) und einen Tiefpassfilter (8) umfasst.

4. Multikanal-Sender nach einem der folgenden Ansprüche, bei dem ein 0-1-Sequenzsignal als Träger für Signalwandlung verwendet wird.

5. Multikanal-Sender nach einem der folgenden Ansprüche, bei dem die elektrischen Modulatoren (12) QPSK-Modulatoren sind, und der optische Modulator (7) ein optischer IQ-Modulator ist.

6. Multikanal-Sender nach einem der folgenden Ansprüche, bei dem die Träger einen Frequenzabstand haben, der einer dreifachen Kanaldistanz entspricht.

7. Multikanal-Sender nach Anspruch 6, wobei die höchste Trägerfrequenz geringer als das Dreifache der Frequenz der niedrigsten Trägerfrequenz ist.

8. Verfahren zum Erzeugen eines Mehrkanal-Frequenzmultiplexsignals, das die folgenden Schritte umfasst:
- Modulieren von Datensignalen zum Erzeugen digitaler modulierter Signale (I,Q);
- Frequenzumwandeln der digitalen modulierten Signale (I,Q) in umgewandelte Signale (WDS) mit höheren und unterschiedlichen Trägerfrequenzen (5, 8, 11, 14 GHz); **gekennzeichnet durch**
- analoges Addieren der umgewandelten Signale (WDS) zum Erreichen eines Modulationssignals (ΣI(t),ΣQ(t)); und
- Modulieren eines optischen Trägers **durch** das Modulationssignal.

9. Verfahren nach Anspruch 8, bei dem die digital modulierten Signale (I,Q) in der Frequenz umgewandelt werden, indem sie mit einem 0-1-Sequenzsignal multipliziert werden.

10. Verfahren nach Anspruch 9, bei dem die umgewandelten Signale einen Trägerfrequenzabstand von dem Dreifachen eines Kanalabstandes aufweisen.

11. Verfahren nach Anspruch 10, bei dem die höchste Trägerfrequenz geringer als das Dreifache der Frequenz der niedrigsten Trägerfrequenz ist.

12. Verfahren nach Anspruch 8, bei dem die digital modulierten Signale (I,Q) in der Frequenz gewandelt werden, indem sie mit einem tiefpassgefilterten 0-1-Sequenz-Trägersignal multipliziert werden.

13. Verfahren nach einem Ansprüche 8 bis 12, bei dem die Trägersignale und/oder digitalen modulierten Signale (I,Q) und/oder das Modulationssignal (ΣI(t),ΣQ(t)) tiefpassgefiltert werden.

## Revendications

1. Émetteur à canaux multiples pour des réseaux optiques, comprenant :
- une pluralité de modulateurs parallèles (Mod QPSK), chacun modulant un signal de données et délivrant en sortie un signal modulé numérique (I, Q) ;
- des unités de conversion de fréquence recevant les signaux modulés numériques (I, Q) et convertissant les signaux modulés numériques (I, Q) en signaux convertis (WDS) avec des fréquences porteuses différentes et plus élevées ; **caractérisé par**
- un totaliseur analogique (2) recevant les signaux convertis (WDS) et délivrant en sortie un signal de modulation (ΣI(t), ΣQ(t)) ; et
- un modulateur optique (7) pour moduler une porteuse optique recevant ledit signal de modulation délivré en sortie par le totaliseur analogique (ΣI(t), ΣQ(t)).

2. Émetteur à canaux multiples selon la revendication 1, dans lequel chacune des unités de conversion de fréquence comprend :
une porte binaire logique et un filtre passe-bande (21) connectés en aval en série.

3. Émetteur à canaux multiples selon la revendication 1, dans lequel chacune des unités de conversion de fréquence comprend :
un multiplicateur analogique (9) et un filtre passe-bas (8).

4. Émetteur à canaux multiples selon l'une quelconque des revendications précédentes, dans lequel un signal de séquence 0-1 est utilisé comme porteuse pour une conversion de signal.

5. Émetteur à canaux multiples selon l'une quelconque des revendications précédentes, dans lequel les modulateurs électriques (12) sont des modulateurs QPSK et le modulateur optique (7) est un modulateur IQ optique.

6. Émetteur à canaux multiples selon l'une quelconque des revendications précédentes, dans lequel les porteuses ont une distance de fréquence égale à trois fois une distance de canal.

7. Émetteur à canaux multiples selon la revendication 6, dans lequel la fréquence porteuse la plus élevée est inférieure à trois fois la fréquence de la fréquence porteuse la plus basse.

8. Procédé pour générer un signal à répartition multiplexée de fréquence, comprenant les étapes suivantes :
- moduler des signaux de données générant des signaux modulés numériques (I, Q) ;
- convertir en fréquence les signaux modulés numériques (I, Q) en signaux convertis (WDS) ayant des fréquences porteuses différentes et plus élevées (5, 8, 11, 14 GHz) ; **caractérisé par**
- un ajout analogique des signaux convertis (WDS) aboutissant à un signal de modulation (ΣI(t), ΣQ(t)) ; et
- une modulation de porteuse optique par le signal de modulation.

9. Procédé selon la revendication 8, dans lequel :
les signaux modulés numériques (I, Q) sont convertis en fréquence en étant multipliés à un signal de séquence 0-1.

10. Procédé selon la revendication 9, dans lequel :
les signaux convertis ont une distance de fréquence porteuse égale à trois fois une distance de canal.

11. Procédé selon la revendication 10, dans lequel :
la fréquence porteuse la plus élevée est inférieure à trois fois la fréquence de la fréquence porteuse la plus basse.

12. Procédé selon la revendication 8, dans lequel :
les signaux modulés numériques (I, Q) sont convertis en fréquence en étant multipliés à un signal porteur de séquence 0-1 filtré passe-bas.

13. Procédé selon l'une quelconque des revendications 8 à 12, dans lequel :
les signaux porteurs et/ou signaux modulés numériques (I, Q) et/ou le signal de modulation (ΣI(t), ΣQ(t)) sont filtrés passe-bas.
